(19) Europäisches Patentamt
European Patent Office
Office européen des brevets

(11) Veröffentlichungsnummer: **0 038 439**
**B1**

# (12) EUROPÄISCHE PATENTSCHRIFT

(45) Veröffentlichungstag der Patentschrift: **04.05.83**

(51) Int. Cl.³: **C 09 B 29/42** // D06P1/18, C10L1/22, C10M1/32

(21) Anmeldenummer: **81102389.4**

(22) Anmeldetag: **30.03.81**

(54) **Farbstoffmischung, Verfahren zu ihrer Herstellung, sie enthaltende Farbstoffe und Verfahren zum Färben und Bedrucken von synthetischem, hydrophobem Fasermaterial.**

(30) Priorität: **02.04.80 DE 3012863**

(43) Veröffentlichungstag der Anmeldung: **28.10.81 Patentblatt 81/43**

(45) Bekanntmachung des Hinweises auf die Patenterteilung: **04.05.83 Patentblatt 83/18**

(84) Benannte Vertragsstaaten: **CH DE FR GB IT LI**

(56) Entgegenhaltungen:
**DE-A-2 323 621**
**DE-A-2 421 819**
**FR-A-2 398 141**
**US-A-3 993 441**

(73) Patentinhaber: **CASSELLA Aktiengesellschaft, Hanauer Landstrasse 526, D-6000 Frankfurt am Main 61 (DE)**

(72) Erfinder: **Ribka, Joachim, Dr., Rügenerstrasse 4, D-6050 Offenbach am Main (DE)**
Erfinder: **Schmidt, Frank, Dr., Obermarkersdorferstrasse 19, D-6454 Bruchköbel (DE)**
Erfinder: **Keil, Karl-Heinz, Dr., Konrad Adenauerstrasse 26, D-6050 Offenbach am Main (DE)**
Erfinder: **Tappe, Horst, Dr., Ringstrasse 9, D-6057 Dietzenbach (DE)**

(74) Vertreter: **Urbach, Hans-Georg, Dr. et al, Hanauer Landstrasse 526, D-6000 Frankfurt am Main 61 (DE)**

**EP 0 038 439 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Farbstoffmischung, Verfahren zu ihrer Herstellung, sie enthaltende Farbstoffe und Verfahren zum Färben und Bedrucken von synthetischem, hydrophobem Fasermaterial

Die Erfindung betrifft Farbstoffmischungen, die dadurch gekennzeichnet sind, daß sie mindestens einen wasserunlöslichen Farbstoff der Formel I und mindestens einen wasserunlöslichen Farbstoff der Formel II enthalten

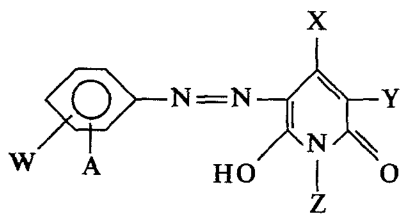

(I)

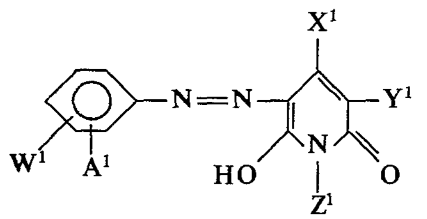

(II)

worin

X, $X^1$ Wasserstoff, Alkyl mit 1 bis 6 C-Atomen, das auch durch Halogen oder Phenyl substituiert sein kann,

Y, $Y^1$ Cyan, Nitro, Alkylcarbonyl mit 1 bis 3 C-Atomen im Alkylrest, Alkoxycarbonyl mit 1 bis 4 C-Atomen im Alkoxyrest, Aminocarbonyl, dessen Aminogruppe auch durch Phenyl monosubstituiert oder durch Alkyl mit 1 bis 4 C-Atomen mono- oder disubstituiert sein kann, Aminosulfonyl, dessen Aminogruppe auch durch Phenyl monosubstituiert oder durch Alkyl mit 1 bis 4 C-Atomen mono- oder disubstituiert sein kann, Phenylsulfonyl, Alkylsulfonyl mit 1 bis 4 C-Atomen, Mono- oder Dialkylphosphonyl mit 1 bis 4 C-Atomen in den Alkylresten,

Z Wasserstoff, Alkyl mit 1 bis 7 C-Atomen, das auch durch Sauerstoff ein- oder mehrfach unterbrochen und/oder auch durch Phenyl, Phenoxy, Halogen, Hydroxy substituiert sein kann, Alkenyl mit 2 bis 7 C-Atomen, das auch durch Phenyl, Halogen, Hydroxy, Alkoxy mit 1 bis 4 C-Atomen substituiert sein kann, Cycloalkyl mit 5 bis 7 C-Atomen, Phenyl,

A, $A^1$ Wasserstoff oder ein Substituent oder mehrere Substituenten aus der Reihe: Halogen, Nitro, Cyan, $CF_3$, Alkyl mit 1 bis 4 C-Atomen, $OR^1$, $COR^2$, $SO_2R^2$, $OSO_2R^2$, $O-CO-R^2$, $COOR^3$, $CON(R^4)R^5$, $SO_2N(R^4)R^5$, $OSO_2N(R^4)R^5$,

$R^1$ Alkyl mit 1 bis 8 C-Atomen, Phenyl, das durch Phenyl, Halogen, Hydroxy substituiert sein kann,

$R^2$ Alkyl mit 1 bis 10 C-Atomen, das durch Phenyl, Phenoxy, Halogen, Hydroxy substituiert sein kann, Phenyl, das durch Alkyl mit 1 bis 12 C-Atomen, Alkoxy mit 1 bis 4 C-Atomen, Halogen substituiert sein kann,

$R^3$ Alkyl mit 1 bis 10 C-Atomen, Cycloalkyl mit 5 bis 7 C-Atomen, Alkenyl mit 2 bis 10 C-Atomen, durch Hydroxy, substituiertes und/oder durch Sauerstoff ein- oder mehrfach unterbrochenes Alkyl mit 1 bis 8 C-Atomen,

$R^4$, $R^5$ Wasserstoff, Alkyl mit 1 bis 6 C-Atomen, das durch Halogen, Phenyl oder Alkoxy mit 1 bis 4 C-Atomen substituiert sein kann, Phenyl, oder $R^4$ und $R^5$ zusammen mit dem N-Atom, an das sie gebunden sind, einen heterocyclischen Ring bilden,

W Wasserstoff, Alkyl mit 1 bis 7 C-Atomen, Alkenyl mit 2 bis 7 C-Atomen,

$W^1$, $Z^1$ Wasserstoff, Alkyl mit 1 bis 4 C-Atomen, Alkyl oder Alkenyl mit jeweils 8 bis 20 C-Atomen, wobei jedoch einer der beiden Substituenten Wasserstoff oder Alkyl mit 1 bis 4 C-Atomen und der andere Substituent Alkyl oder Alkenyl mit jeweils 8 bis 20 C-Atomen sein muß, bedeuten.

Die Erfindung betrifft außerdem ein Verfahren zur Herstellung der Farbstoffmischungen und ihre Verwendung zum Färben und Bedrucken von synthetischem, hydrophobem Fasermaterial.

Die Alkyl- und Alkenylreste können geradkettig oder verzweigt sein. Halogen bedeutet insbesondere Fluor, Chlor, Brom. $R^4$ und $R^5$ können mit dem Stickstoffatom, an das sie gebunden sind, z. B. einen Morpholinring oder Piperazinring bilden, wobei das zweite Stickstoffatom des Piperazinrings auch durch Alkyl mit 1 bis 4 C-Atomen substituiert sein kann. Falls Z oder $Z^1$ Wasserstoff bedeutet, können die Farbstoffe auch noch in anderen tautomeren Formen vorliegen.

Vorzugsweise bedeuten X, $X^1$ $CH_3$; Y, $Y^1$ CN; A, $A^1$ Wasserstoff oder Nitro, Cyan, Chlor, Brom, Alkyl mit 1 bis 4 C-Atomen, Alkoxy mit 1 bis 4 C-Atomen, Phenylsulfonyloxy; W Wasserstoff, Alkyl mit 1 bis 4 C-Atomen; Z Methyl, insbesondere aber Wasserstoff; $W^1$, $Z^1$ Wasserstoff, Methyl, Alkenyl oder insbesondere Alkyl mit jeweils 8 bis 20 C-Atomen, wobei entweder $W^1$ oder $Z^1$ Wasserstoff oder Methyl sein muß.

Die Farbstoffe der Formeln I und II sind zum großen Teil bekannt (vergleiche z. B. DE-C-1 544 446, DE-A-1 813 385, DE-A-1 927 213, DE-A-1 932 806, DE-A-1 901 749, DE-A-1 901 711, DE-A-2 323 621, DE-A-2 421 819. Sie können durch Diazotieren und Kupplung hergestellt werden.

Farbstoffe der allgemeinen Formel II, bei denen $W^1$ Alkyl oder Alkenyl mit jeweils 8 bis 20 C-Atomen und $Z^1$ Wasserstoff oder Alkyl mit 1 bis 4 C-Atomen bedeuten und Farbstoffe der allgemeinen Formel II, bei denen $Z^1$ Alkyl oder Alkenyl-Reste mit 16 bis 20 C-Atome und $W^1$ Wasserstoff, Alkyl mit 1 bis 7 C-Atomen oder Alkenyl mit 2 bis 7 C-Atomen bedeuten, sind jedoch in der Literatur noch nicht beschrieben und werden im Rahmen der vorliegenden Erfindung beansprucht. Die neuen Farbstoffe werden in an sich bekannter Weise durch Diazotierung und Kupplung hergestellt. Die Diazo- und Kupplungskomponenten werden analog zu den entsprechenden Komponenten mit niederen Alkylresten synthetisiert.

Farbstoffe der Formel I sind farbstarke, gelbe bis orangene Verbindungen, die um so farbstärker sind, je weniger Substituenten sie außer dem chromophoren System tragen. Eine Substitution mit Gruppen, die nicht an dem chromophoren System beteiligt sind bringt nur eine Erhöhung des Molekulargewichts und damit eine Erniedrigung der Farbstärke pro Gramm Substanz. Die besonders farbstarken Farbstoffe der Formel I, die nur die zur Erzielung einer hohen Farbstärke notwendigen Gruppen tragen, besitzen jedoch oft coloristische Nachteile, die einen technischen Einsatz unmöglich machen, wie z. B. niedrige Trockenhitzeplissier- und Trockenhitzefixierechtheit und/oder pH-Empfindlichkeit.

Die Farbstoffe der Formel II besitzen ein ausgezeichnetes Ziehvermögen auf Polyester und sehr gute Trockenhitzeplissier- und Trockenhitzefixierechtheit.

Bei den Farbstoffen der Formel II sinkt jedoch die Farbstärke durch die Substitution mit dem langkettigen Alkylrest in der Diazo- oder Kupplungskomponente gegenüber solchen Farbstoffen ab, die statt der langkettigen Alkylgruppe durch Wasserstoff oder Niederalkyl substituiert sind.

Überraschenderweise wurde nun gefunden, daß man die wertvollen coloristischen Eigenschaften der mit langkettigen Alkylgruppen substituierten Farbstoffen der Formel II erhalten kann und gleichzeitig die Farbstärkevorteile der keine langkettigen Fettalkylgruppen tragenden Farbstoffe der Formel I nützen kann, indem man Mischungen dieser beiden Farbstoffklassen herstellt.

Die erfindungsgemäßen Mischungen enthalten normalerweise 10 bis 50 Mol-%, vorzugsweise 10 bis 20 Mol-% Farbstoffe der Formel II.

Die erfindungsgemäßen Farbstoffmischungen können nach verschiedenen Verfahren hergestellt werden. Einmal durch Mischung der Einzelfarbstoffe — vorzugsweise unter Zusatz von Dispergiermitteln. Dieser Mischprozeß erfolgt zweckmäßigerweise in geeigneten Mühlen, beispielsweise Kugel- und Sandmühlen sowie Kneter.

Als Dispergiermittel kommen solche anionischer oder nichtionischer Natur in Betracht. Als anionische Dispergiermittel seien genannt Kondensationsprodukte von Naphthalin, Formaldehyd und Schwefelsäure sowie Ligninsulfonate. Nichtionische Dispergiermittel sind z. B. in der DE-A-2 757 330 beschrieben.

Ein bevorzugtes Verfahren zur Herstellung der Farbstoffmischungen ist dadurch charakterisiert, daß man eine Diazokomponente III und/oder IV

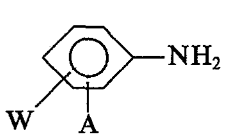

(III)

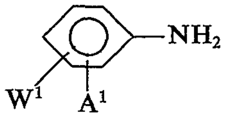

(IV)

diazotiert und auf eine Kupplungskomponente V und/oder VI kuppelt

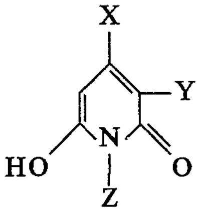

(V)

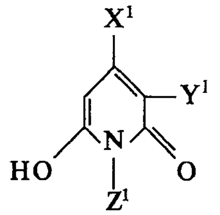

(VI)

und dabei die Komponenten so auswählt, daß erfindungsgemäße Farbstoffmischungen entstehen. So kann z. B. ein Gemisch zweier diazotierter Diazokomponenten III und IV auf eine Kupplungskomponente V gekuppelt werden, oder es kann eine diazotierte Diazokomponente III auf ein Gemisch von Kupplungskomponenten V und VI gekuppelt werden. Die Diazotierungen und Kupplungen werden in an sich bekannter Weise durchgeführt.

Beispiele für geeignete Diazokomponenten III und IV sind: Anilin, 4-n-Dodecyl-anilin, 4-n-Stearylanilin, 4-n-Behenylanilin, 2-, 3- bzw. 4-Amino-toluol, 3-Amino-benzotrifluorid, 3- bzw. 4-Amino-1,2-dimethylbenzol, 2-, 4- bzw. 5-Amino-1,3-dimethylbenzol, 4-Amino-1,3,5-trimethylbenzol, 2-, 3- bzw. 4-Aminoanisol, 2-, 3- bzw. 4-Amino-phenetol, 2-Amino-1,4-dimethoxybenzol, 2-, 3- bzw. 4-Chloranilin, 2-, 3- bzw. 4-Bromanilin, 2,3-, 2,4-, 2,5- bzw. 3,4-Dichloranilin, 2,5-Dibromanilin, 2,4,5-, 2,4,6-, 3,4,5- bzw. 3,4,6-Trichloranilin, 3-, 4-, 5- bzw. 6-Chlor-2-aminotoluol, 4-Chlor-3-amino-toluol, 2-Chlor-4-amino-toluol, 5-Chlor-2-amino-benzotrifluorid, 4,5- bzw. 4,6-Dichlor-2-aminotoluol, 2,5- bzw. 4,6-Dichlor-3-amino-toluol, 2,5- bzw. 3,5-Dichlor-4-amino-toluol, 4,5,6-Trichlor-2-amino-toluol, 4-Chlor-2-amino-1,3-dimethyl-benzol, 2-Chlor-4-n-dodecylanilin, 2-Brom-4-n-hexadecylanilin, 6-Chlor-3-amino-anisol, 2-Chlor-4-amino-anisol, 3-Chlor-4-amino-anisol, 2-, 3- bzw. 4-Nitranilin, 3-Nitro-4-amino-toluol, 5-Nitro-4-amino-1,3-dimethylbenzol, 6-Nitro-3-amino-anisol, 3-Nitro-4-amino-anisol, 5-Nitro-2-amino-phenetol, 2-Nitro-4-amino-phenetol, 3-Nitro-4-amino-phenetol, 5-Nitro-2-amino-1,4-dimethoxy-Benzol, 5-Nitro-2-amino-1,4-diethoxy-benzol, 2-Chlor-4-nitranilin, 2-Brom-4-nitranilin, 4-Chlor-2-nitranilin, 4-Brom-2-nitranilin, 2,6-Dichlor-4-nitranilin, 2,6-Dibrom-4-nitranilin, 2,4-Dinitranilin, 6-Chlor-2,4-dinitranilin, 6-Brom-2,4-dinitranilin, 2,4,6-Trinitranilin, 2-Cyan-4-nitranilin, 4-Cyan-3-nitranilin, 2-Methylsulfonyl-4-nitranilin, 4-Methylsulfonyl-2-nitranilin, 2-, 3- bzw. 4-Aminoacetophenon, 2-, 3- bzw. 4-Amino-benzophenon, 4-Amino-4′-methylbenzophenon, 4-Amino-4′-isopropyl-benzophenon, 4-Amino-4′-tert. butyl-benzophenon, 4-Amino-4′-dodecyl-benzophenon, 2-, 3- bzw. 4-Amino-benzoesäure-ethylester, 2-, 3- bzw. 4-Aminobenzoesäure-n-butylester, 2-, 3- bzw. 4-Amino-benzoesäure-cyclohexylester, 4-Amino-benzoesäure-methoxy-ethoxy-ethylester, 4-Amino-benzoesäure-2-ethylhexylester, 2-, 3- bzw. 4-Amino-benzoesäureamid, 2-, 3- bzw. 4-Amino-benzoesäure-monomethylamid, 2-, 3- bzw. 4-Amino-benzoesäure-dimethylamid, 2-, 3- bzw. 4-Aminobenzoesäure-iso-propylamid, 2-, 3- bzw. 4-Amino-benzoesäurediethylamid, 2-, 3- bzw. 4-Amino-benzoesäure-di-n-butylamid, 2-, 3- bzw. 4-Amino-benzoesäure-morpholid, 2-, 3- bzw. 4-Amino-benzoesäure-anilid, 2-, 3- bzw. 4-Amino-benzoesäure-N-methylanilid, 4-Amino-benzoesäure-2-ethyl-hexylamid, 2-, 3- bzw. 4-Amino-phenylmethylsulfon, 2-, 3- bzw. 4-Amino-phenyl-ethylsulfon, 2-, 3- bzw. 4-Amino-phenyl-n-propylsulfon, 4-Amino-phenyl-i-butylsulfon, 4-Amino-phenyl-n-decylsulfon, 2-, 3- bzw. 4-Amino-phenyl-methylsulfonsäureester, 2-, 3- bzw. 4-Amino-phenyl-ethyl-sulfonsäurester, 2-, 3- bzw. 4-Amino-phenyl-β-chlorethyl-sulfonsäureester, 2-, 3- bzw. 4.Amino-phenyl-n-butyl-sulfonsäureester, 2-, 3- bzw. 4-Amino-phenyl-n-hexylsulfonsäureester, 2-, 3- bzw. 4-Aminophenyl-phenyl-sulfonsäureester, 2-, 3- bzw. 4-Amino-phenyl-(4′-methyl-phenyl)-sulfonsäureester, 2-, 3- bzw. 4-Amino-phenyl-(4′-methoxy-phenyl)-sulfonsäureester, 2-, 3- bzw. 4-Amino-phenyl-dimethylsulfamidsäureester, 2-, 3- bzw. 4-Amino-phenyl-diethylsulfamidsäureester, 2-, 3- bzw. 4-Amino-phenyl-di-n-butylsulfamidsäureester, 2-, 3- bzw. 4-Amino-benzol-sulfonsäureamid, 2-, 3- bzw. 4-Amino-benzolsulfonsäure-monomethylamid, 2-, 3- bzw. 4-Amino-benzolsulfonsäure-dimethylamid, 2-, 3- bzw. 4-Amino-benzolsulfonsäure-diethylamid, 2-, 3- bzw. 4-Amino-benzolsulfonsäure-di-n-butylamid, 2-, 3- bzw. 4-Amino-benzolsulfonsäuremorpholid, 2-, 3- bzw. 4-Amino-benzolsulfonsäure-anilid, 2-, 3- bzw. 4-Amino-benzolsulfonsäure-N-methyl-anilid, 4-Amino-benzolsulfonsäure-N-methyl-N-benzylamid, 4-Amino-benzolsulfonsäure-N-2-ethyl-hexylamid, 1-Methoxy-2-amino-benzol-4-sulfonsäureamid, 1-Methoxy-2-aminobenzol-4-sulfonsäure-dimethylamid, 1-Methoxy-2-amino-benzol-4-sulfonsäure-N-methylanilid, 1-Chlor-2-aminobenzol-4-sulfonsäure-dimethylamid, 1-Chlor-4-aminobenzol-2-sulfonsäure-dimethylamid, 2-, 3- bzw. 4-Amino-acetanilid, 2-, 3- bzw. 4-Amino-(β-butoxy-propionylanilid), 2-, 3- bzw. 4-Amino-phenoxyacetanilid, 2-, 3- bzw. 4-Amino-N-methyl-acetanilid.

Auch die Kupplungskomponenten V und VI sind zum größten Teil bekannt. Sie lassen sich nach an sich bekannten Verfahren herstellen, insbesondere lassen sie sich durch Kondensation von Essigsäureestern der Formel VII, mit Acylessigestern der Formel VIII und Aminen der Formel IX

$$X—CH_2—COOR \qquad Y—CO—CH_2—COOR \qquad H_2NZ^2$$

(VII) (VIII) (IX)

wobei X und Y die bereits genannte Bedeutung besitzen, R Alkyl mit 1 bis 4 C-Atomen und $Z^2 = Z$ oder $Z^1$ bedeutet, nach den Lehren von Bobbitt und Scola (J. Org. Chem. 25, 560 (1960)) herstellen. Man

kann auch zunächst den Ester VII mit dem Amin IX zu dem Amid X

$$X—CH_2—CO—NHZ^2 \qquad (X)$$

und dieses mit dem Acylessigester VII oder zunächst den Acylessigester VIII mit dem Amin IX zu dem Acylessigamid XII

$$Y—CO—CH_2—CO—NHZ^2 \qquad (XII)$$

und dieses mit dem Ester VII umsetzen, um die Pyridon-Kupplungskomponenten der Formeln V und VI zu erhalten.

Geeignete Kupplungskomponenten der Formel V und VI sind beispielsweise 6-Oxy-3-cyan-2-pyridon, 1-Methyl-3-nitro-6-oxy-2-pyridon, 1-Phenyl-3-cyan-6-oxy-2-pyridon, 1-Stearyl-3-cyan-6-oxy-2-pyridon, 1-Methyl-4-methyl-3-acetyl-6-oxy-2-pyridon, 1-Ethyl-4-methyl-3-cyan-6-oxy-2-pyridon, 1-n-bzw. iso-Propyl-4-methyl-3-cyan-6-oxy-2-pyridon, 1-n,iso- bzw. sec.-Butyl-4-methyl-3-aminocarbonyl-6-oxy-2-pyridon, 1-n- bzw. iso-Amyl-4-methyl-3-propionyl-6-oxy-2-pyridon, 1-n-Hexyl-4-methyl-3-cyan-6-oxy-2-pyridon, 1,2'-Ethylhexyl-3-nitro-4-methyl-6-oxy-2-pyridon, 1-(2'-Hydroxy-ethyl)-3-cyan-4-methyl-6-oxy-2-pyridon, 1-(3'-Hydroxy-propyl)-3-aminocarbonyl-4-methyl-6-oxy-2-pyridon, 1-(2'-Phenoxy-ethyl)-3-Phenylaminocarbonyl-4-methyl-6-oxy-2-pyridon, 1-(3'-Methoxy-propyl)-3-aminosulfonyl-4-methyl-6-oxy-2-pyridon, 1-Cyclohexyl-4-methyl-3-cyan-6-oxy-2-pyridon, 1-Benzyl-4-methyl-3-methylaminosulfonyl-6-oxy-2-pyridon, 1-(3'-Methyl-benzyl)-3-methoxycarbonyl-4-methyl-6-oxy-2-pyridon, 1-Phenyl-4-methyl-3-cyan-6-oxy-2-pyridon.

Des weiteren sind geeignet die Pyridone, die in 4-Stellung eine Ethyl, n- bzw. iso-Propyl, n-Butyl, n-Amyl, n-Hexyl, Benzyl- oder Phenyl-Gruppe oder Cycloalkylgruppe mit 5 bis 7 C-Atomen enthalten, ferner Derivate dieser Pyridone, wie beispielsweise solche, die in 3-Stellung durch eine Cyan-, Nitro-, Acyl-, Carbonester, Phosphonester ggf. substituierte Carbamoyl- oder Sulfamoyl oder Sulfongruppe substituiert sind.

Die erfindungsgemäßen Farbstoffmischungen eignen sich sehr gut zum Färben und Bedrucken von Gebilden aus synthetischen Materialien, wie beispielsweise Polyacrylnitril, Polyamid, Cellulose-2$^1/_2$-acetat, Cellulosetriacetat und insbesondere Polyestermaterialien, z. B. Polyethylenglykolterephthalat. Sie liefern hierauf nach den üblichen Färbe- und Druckverfahren farbstarke klare, gelbe bis orange Färbungen und Drucke mit sehr guten Echtheiten, insbesondere sehr guter Licht- und Trockenhitzeplissier- und Trockenhitzefixierechtheit.

Farbstoffmischungen mit Farbstoffen, die in 3-Stellung des Pyridonkerns eine Cyangruppe besitzen, liefern Färbungen und Drucke von besonders günstigen coloristischen Eigenschaften und werden daher bevorzugt, insbesondere wenn die Farbstoffe für X eine Methylgruppe besitzen.

Das Färben der genannten Materialien erfolgt zweckmäßig aus wäßriger Dispersion in Gegenwart von Carriern zwischen etwa 80° und 110° C, in Abwesenheit von Carriern zwischen etwa 110° bis 140° C, sowie nach dem sogenannten Thermofixierverfahren bei etwa 170° bis 230° C. Das Bedrucken kann so durchgeführt werden, daß die bedruckte Ware in Gegenwart eines Carriers bei Temperaturen zwischen etwa 80° und 100° C oder auch in Abwesenheit eines Carriers bei etwa 110° bis 140° C gedämpft oder auch nach dem sogenannten Thermofixierverfahren bei etwa 170° bis 230° C behandelt wird.

Im folgenden bedeuten Teile Gewichtsteile

Beispiel 1

a) 12,1 Teile 4-Methyl-2-nitroanilin und 0,5 Teile 4-n-Dodecylanilin werden in 90 Teilen Essigsäure und 10 Teilen Wasser mit 32,6 Teilen 42%iger Nitrosylschwefelsäure in Schwefelsäure in 30 Minuten bei 10—15° C unter Außenkühlung diazotiert und das Reaktionsgemisch 1 Stunde bei 10° C nachgerührt. Die erhaltene Diazolösung läßt man dann in eine Suspension von 16,5 Teilen 3-Cyan-4-methyl-6-hydroxy-2-pyridon in 400 Teilen Wasser und 16,6 Teilen Natronlauge 33° Bé in 30 Minuten einfließen und hält die Reaktionstemperatur während der Kupplung durch Zugabe von 500 Teilen Eis bei 0 bis +5° C. Die entstandene Farbstoffmischung wird nach beendeter Kupplung abgesaugt, mit Wasser neutral gewaschen und getrocknet. Es wird eine Farbstoffmischung erhalten, die zu 80 Mol-% aus dem Farbstoff der Formel

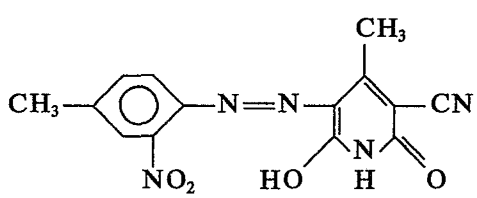

(XIII)

und zu 20 Mol.-% aus dem Farbstoff der Formel

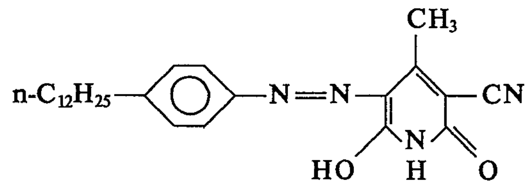

(XIV)

besteht.

b) 1,0 Teile der so erhaltenen, feindispergierten Farbstoffmischung werden in 2000 Gewichtsteilen Wasser eingerührt. Es wird mit Essigsäure auf einen pH-Wert von 5—6 eingestellt und mit 4 Gewichtsteilen Ammoniumsulfat und 2 Gewichtsteilen eines handelsüblichen Dispergiermittels auf Basis eines Naphthalinsulfonsäure-Formaldehyd-Kondensats versetzt.

In die so erhaltene Färbeflotte bringt man 100 Gewichtsteile eines Polyestergewebes auf Basis von Polyethylenglykolterephthalat ein und färbt 1½ Stunden bei 120—130°C. Nach anschließendem Spülen, reduktiver Nachbehandlung mit einer 0,2%igen alkalischen Natriumdithionitlösung während 15 Minuten bei 60—70°C, Spülen und Trocknen, erhält man eine farbstarke gelbe Färbung mit sehr guten Echtheitseigenschaften, insbesondere einer sehr guten Licht- und Trockenhitzeplissier- und Trockenhitzefixierechtheit.

Die nach 1a) erhaltene Farbstoffmischung zeigt beim Färben ein hohes Aufbauvermögen. Sie besitzt eine bessere pH-Stabilität als der Farbstoff der Formel XIII, und bei Einsatz gleicher Mengen ist die Mischung farbstärker sowohl im Vergleich zu dem Farbstoff der Formel XIII als auch im Vergleich zu dem Farbstoff der Formel XIV.

## Beispiel 2

a) 13,6 Teile 4-Methyl-2-nitroanilin und 0,26 Teile 4-n-Dodecyanilin werden wie in Beispiel 1a) beschrieben diazotiert und auf 3-Cyan-4-methyl-6-hydroxy-2-pyridon gekuppelt. Die entstandene Farbstoffmischung wird nach beendeter Kupplung abgesaugt, mit Wasser neutral gewaschen und getrocknet.

b) 30 Teile der nach Beispiel 2a) erhaltenen Farbstoffmischung der folgenden Zusammensetzung

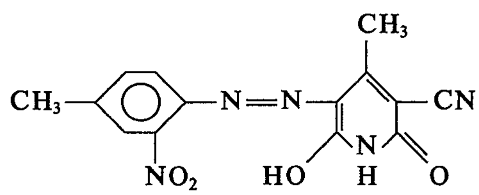

90 Mol.-% (XV)

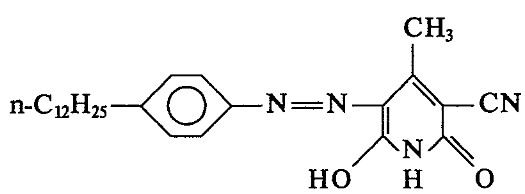

10 Mol.-% (XVI)

werden in feiner Verteilung einer Druckpaste, die 45,0 Gewichtsteile Johannisbrotkernmehl, 6,0 Gewichtsteile 3-nitro-benzol-sulfonsaures Natrium und 3,0 Gewichtsteile Zitronensäure auf 1000 Gewichtsteile enthält, einverleibt. Mit dieser Druckpaste erhält man auf einem Polyestergewebe nach dem Bedrucken, Trocknen und Fixieren im Thermofixierrahmen während 45 Sekunden bei 215°C, Spülen und Fertigstellung, wie im Beispiel 1b, Absatz 2, beschrieben, einen farbstarken gelben Druck von sehr guten Echtheitseigenschaften, insbesondere einer sehr guten Licht-, Trockenhitzeplissier- und Trockenhitzefixierechtheit.

## Beispiel 3

a) 15,2 Teile 2-Methyl-4-nitroanilin werden in 300 Teilen Wasser unter Zusatz von 36 Teilen 30%iger Salzsäure bei 0 bis +5°C mit einer Lösung von 7,7 Teilen Natriumnitrit in 50 Teilen Wasser diazotiert. Die filtrierte, klare Diazolösung läßt man dann in ein Kupplungsgemisch einfließen, das aus 300 Teilen Wasser, 12,0 Teilen 3-Cyan-4-methyl-6-hydroxy-2-pyridon, 3,2 Teilen Natronlauge und einer Lösung von 8,0 Teilen 1-Stearyl-3-cyan-4-methyl-6-hydroxy-2-pyridon in 200 Teilen Wasser, 1,2 Teilen Natronlauge und 150 Teilen Ethanol hergestellt wurde.

Während der Kupplung hält man die Reaktionstemperatur durch Zugabe von 500 Teilen Eis bei 0 bis +5°C. Die entstandene Farbstoffmischung wird nach beendeter Kupplung abgesaugt, mit Wasser neutral gewaschen und getrocknet.
Das 1-Stearyl-3-cyan-4-methyl-6-hydroxy-2-pyridon wurde nach bekannten Verfahren durch Kondensation von Cyanessigsäuremonostearylamid mit Acetessigsäureäthylester hergestellt. Cyanessigsäuremonostearylamid ist seinerseits leicht aus Cyanessigsäureestern und N-Stearylamin zugänglich.

b) Es wird eine Farbstoffmischung folgender Zusammensetzung

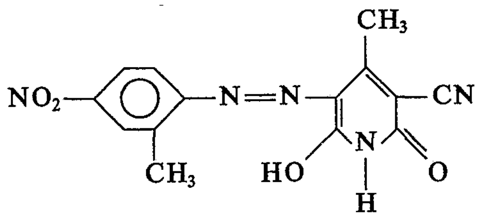
80 Mol.-% (XVII)

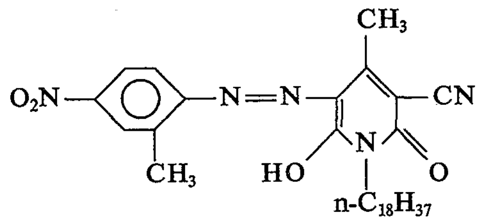
20 Mol.-% (XVIII)

erhalten, die wie in Beispiel 1b angegeben gefärbt wird. Man erhält eine farbstarke gelbe Färbung mit guten Echtheitseigenschaften, insbesondere guter Licht-, Trockenhitzeplissier- und Trockenhitzefixierechtheit.
Gegenüber den Einzelfarbstoffen der Formel XVII und XVIII zeichnet sich die Mischung durch höhere Farbstärke aus und gegenüber dem Farbstoff der Formel XVIII durch bessere pH-Beständigkeit im Färbebad, was von besonderem technischem Interessse ist bei Polyester-Baumwoll-Mischgewebe, insbesondere von mercerisierter Baumwolle in Gemischen mit Polyester.

Beispiel 4

a) 15,2 Teile 2-Methyl-4-nitroanilin werden, wie in Beispiel 3a beschrieben, diazotiert, und die klare Diazolösung läßt man dann in ein Kupplungsgemisch einfließen, das aus 300 Teilen Wasser, 13,5 Teilen 3-Cyan-4-methyl-6-hydroxy-2-pyridon, 3,6 Teilen Natronlauge und einer Lösung von 4,0 Teilen 1-Stearyl-3-cyan-4-methyl-6-hydroxy-2-pyridon in 200 Teilen Wasser, 1,2 Teilen Natronlauge und 150 Teilen Ethanol hergestellt wurde. Während der Kupplung hält man die Reaktionstemperatur durch Zugabe von 500 Teilen Eis bei 0 bis +5°C. Die entstandene Farbstoffmischung wird nach beendeter Kupplung abgesaugt, mit Wasser neutral gewaschen und getrocknet.

b) Ein Gewebe aus Polyethylenglykolterephthalat wird auf einem Foulard bei 30°C mit einer Flotte geklotzt, die 30 Teile der im vorangehenden Abschnitt 4a hergestellten und in feine Verteilung gebrachten Farbstoffmischung der folgenden Zusammensetzung

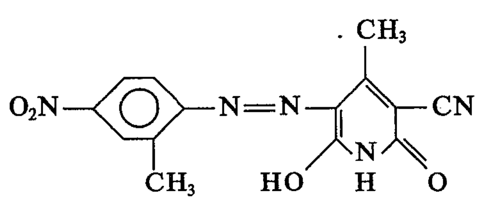
90 Mol.-% (XIX)

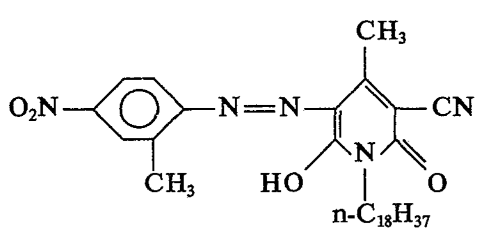
10 Mol.-% (XX)

1,0 Teile Polyacrylamid vom K-Wert 120 und 0,5 Teile eines Polyglykolethers des Oleylalkohols und 968,5 Teile Wasser enthält. Nach dem Trocknen wird 60 Sekunden bei 210°C im Thermofixierrahmen thermofixiert. Nach anschließendem Spülen und Fertigstellung, wie in Beispiel 1b beschrieben, erhält man farbstarke, gelbe Färbungen mit sehr guten Echtheitseigenschaften.

Beispiel 5

a) 150 Teile Essigsäure, 20 Teile Wasser, 26,1 Teile p-n-Dodecylanilin werden innerhalb von 30 Minuten bei 15—20°C mit 32,6 Teilen 42%iger Nitrosylschwefelsäure versetzt und das Reaktionsgemisch 1 Stunde bei 20°C nachgerührt. Die erhaltene Diazolösung wird dann wie im Beispiel 1 angegeben auf 3-Cyan-4-methyl-6-hydroxy-2-pyridon gekuppelt und der Farbstoff isoliert.

b) Wie im Beispiel 5a) angegeben wird in gleicher Weise 4-Methyl-2-nitro-anilin diazotiert und auf 3-Cyan-4-methyl-6-hydroxy-2-pyridon gekuppelt.

c) Stellt man in einer Sandmühle eine feine Dispersion aus 20 Teilen des Farbstoffs aus Beispiel 5a) und 80 Teilen des Beispiels 5b) her und verfährt im übrigen wie im Beispiel 1b) angegeben, so erhält man den gleichen vorteilhaften Effekt, wie mit der unter Beispiel 1 hergestellten und gefärbten Farbstoffmischung.

Die Farbstoffe der Formel II kann man auch als Fettfarbstoffe verwenden, da sie sich in Kohlenwasserstoffen, Wachsen, Kunststoffen, Alkoholen und ähnlichen unpolaren Medien lösen und in diesen Medien eine hohe Farbstärke, hohe Lichtechtheit und hohe Temperaturbeständigkeit (bis 300°C und darüber) besitzen. Die Farbstoffe der Formel II eignen sich daher zum Colorieren dieser unpolaren Medien, z. B. für das Massefärben von Kunststoff und für die Herstellung von Schreibtinten. Besonders geeignet sind für diesen Zweck z. B. folgende Farbstoffe:

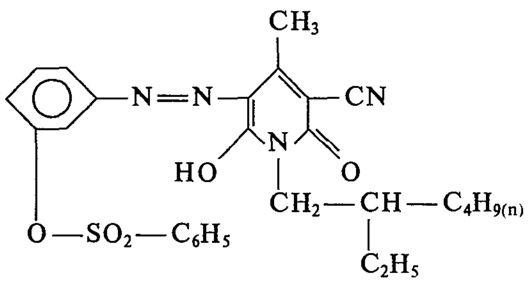

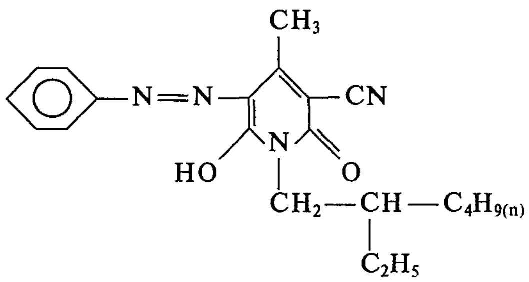

sowie die Farbstoffe der Beispiele 6 und 7.

Beispiel 6

In 100 Teile Wasser und 40 Teile 35%ige Salzsäure werden 24,9 Teile Benzolsulfonsäure-3'-aminophenylester gelöst, unter Zusatz von 150 Teilen Eis mit einer Lösung von 7,6 Teilen Natriumnitrit in 55 Teilen Wasser diazotiert. Der Ansatz wird 1 Stunde bei 0°C nachgerührt und über Celite filtriert. Zur Kupplung legt man 400 Teile Wasser, 10 Teile Natriumhydroxid und 40,2 Teile 1-Stearyl-2-hydroxy-3-cyan-4-methyl-6-pyridon vor, erhitzt zum Lösen auf 80°C und kühlt durch Zugabe von 1000 Teilen Eis auf 0°C ab. Nun läßt man die Diazolösung in 30 Minuten zulaufen, rührt 8 Stunden nach, filtriert, wäscht und trocknet. Der erhaltene Farbstoff der Formel

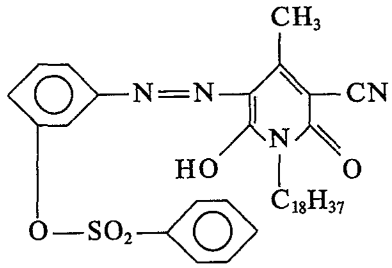

färbt z. B. Mineralöle, Wachs und Schreibtinten mit hoher Färbestärke und guten Echtheiten, insbesondere guter Lichtechtheit in brillanter, grünstichig gelber Nuance.

Beispiel 7

100 Teile Wasser, 20 Teile 35%ige Salzsäure und 9,3 Teile Anilin werden unter Zusatz von 150 Teilen Eis mit einer Lösung von 7,6 Teilen Natriumnitrit in 55 Teilen Wasser diazotiert bei 0° C.

Bei der Kupplung verfährt man wie in Beispiel 6 angegeben, nur es werden statt 40,2 Teilen 1-Stearyl-2-hydroxy-3-cyan-4-methyl-6-pyridon 37,2 Teile 1-Oleyl-2-hydroxy-3-cyan-4-methyl-6-pyridon eingesetzt. Der erhaltene Farbstoff der Formel

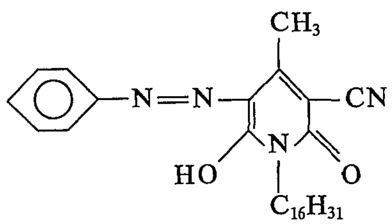

färbt z. B. Mineralöle, Wachs und Schreibtinten mit hoher Färbestärke und guten Echtheiten, insbesondere guter Lichtechtheit in brillanter, gelber Nuance.

**Patentansprüche**

1. Farbstoffmischung, dadurch gekennzeichnet, daß sie mindestens einen wasserunlöslichen Farbstoff der Formel I und mindestens einen wasserunlöslichen Farbstoff der Formel II enthält

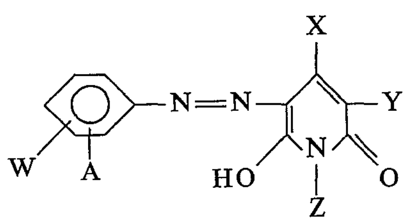

(I)

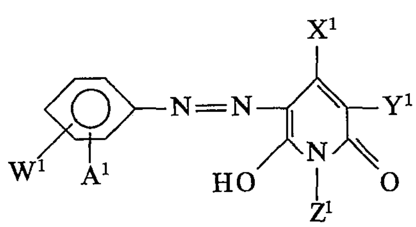

(II)

worin

X, X¹ Wasserstoff, Alkyl mit 1 bis 6 C-Atomen, das auch durch Halogen oder Phenyl substituiert sein kann,

Y, Y¹ Cyan, Nitro, Alkylcarbonyl mit 1 bis 3 C-Atomen im Alkylrest, Alkoxycarbonyl mit 1 bis 4 C-Atomen im Alkoxyrest, Aminocarbonyl, dessen Aminogruppe auch durch Phenyl monosubstituiert oder durch Alkyl mit 1 bis 4 C-Atomen mono- oder disubstituiert sein kann, Aminosulfonyl, dessen Aminogruppe auch durch Phenyl monosubstituiert oder durch Alkyl mit 1 bis 4 C-Atomen mono- oder disubstituiert sein kann, Phenylsulfonyl, Alkylsulfonyl mit 1 bis 4 C-Atomen, Mono- oder Dialkylphosphonyl mit 1 bis 4 C-Atomen in den Alkylresten,

| | |
|---|---|
| Z | Wasserstoff, Alkyl mit 1 bis 7 C-Atomen, das auch durch Sauerstoff ein- oder mehrfach unterbrochen und/oder auch durch Phenyl, Phenoxy, Halogen, Hydroxy substituiert sein kann, Alkenyl mit 2 bis 7 C-Atomen, das auch durch Phenyl, Halogen, Hydroxy, Alkoxy mit 1 bis 4 C-Atomen substituiert sein kann, Cycloalkyl mit 5 bis 7 C-Atomen, Phenyl, |
| A, $A^1$ | Wasserstoff oder ein Substituent oder mehrere Substituenten aus der Reihe: Halogen, Nitro, Cyan, $CF_3$, Alkyl mit 1 bis 4 C-Atomen, $OR^1$, $COR^2$, $SO_2R^2$, $OSO_2R^2$, $O-CO-R^2$, $COOR^3$, $CON(R^4)R^5$, $SO_2N(R^4)R^5$, $OSO_2N(R^4)R^5$, |
| $R^1$ | Alkyl mit 1 bis 8 C-Atomen, Phenyl, das durch Phenyl, Halogen, Hydroxy substituiert sein kann, |
| $R^2$ | Alkyl mit 1 bis 10 C-Atomen, das durch Phenyl, Phenoxy, Halogen, Hydroxy substituiert sein kann, Phenyl, das durch Alkyl mit 1 bis 12 C-Atomen, Alkoxy mit 1 bis 4 C-Atomen, Halogen substituiert sein kann, |
| $R^3$ | Alkyl mit 1 bis 10 C-Atomen, Cycloalkyl mit 5 bis 7 C-Atomen, Alkenyl mit 2 bis 10 C-Atomen, durch Hydroxy, substituiertes und/oder durch Sauerstoff ein- oder mehrfach unterbrochenes Alkyl mit 1 bis 8 C-Atomen, |
| $R^4$, $R^5$ | Wasserstoff, Alkyl mit 1 bis 6 C-Atomen, das durch Halogen, Phenyl oder Alkoxy mit 1 bis 4 C-Atomen substituiert sein kann, Phenyl, oder $R^4$ und $R^5$ zusammen mit dem N-Atom, an das sie gebunden sind, einen heterocyclischen Ring bilden, |
| W | Wasserstoff, Alkyl mit 1 bis 7 C-Atomen, Alkenyl mit 2 bis 7 C-Atomen, |
| $W^1$, $Z^1$ | Wasserstoff, Alkyl mit 1 bis 4 C-Atomen, Alkyl oder Alkenyl mit jeweils 8 bis 20 C-Atomen, wobei jedoch einer der beiden Substituenten Wasserstoff oder Alkyl mit 1 bis 4 C-Atomen und der andere Substituent Alkyl oder Alkenyl mit jeweils 8 bis 20 C-Atomen sein muß, |

bedeuten.

2. Farbstoffmischung nach Anspruch 1, dadurch gekennzeichnet, daß Y, $Y^1$ Cyan bedeutet.

3. Farbstoffmischung nach den Ansprüchen 1 oder 2, dadurch gekennzeichnet, daß X, $X^1$ Methyl bedeutet.

4. Farbstoffmischung nach den Ansprüchen 1 bis 3, dadurch gekennzeichnet, daß sie 10 bis 50 Mol-%, vorzugsweise 10 bis 20 Mol-%, eines Farbstoffs der Formel II enthält.

5. Farbstoffmischung nach den Ansprüchen 1 bis 4, dadurch gekennzeichnet, daß X, $X^1$ $CH_3$; Y, $Y^1$ CN; A, $A^1$ Wasserstoff, Nitro, Cyan, Chlor, Brom, Alkyl mit 1 bis 4 C-Atomen, Alkoxy mit 1 bis 4 C-Atomen, Phenylsulfonyloxy, W Wasserstoff, Alkyl mit 1 bis 4 C-Atomen, Z Methyl, insbesondere aber Wasserstoff, $W^1$, $Z^1$ Wasserstoff, Methyl, Alkenyl oder insbesondere Alkyl mit jeweils 8 bis 20 C-Atomen, wobei entweder $W^1$ oder $Z^1$ Wasserstoff oder Methyl sein muß, bedeuten.

6. Verfahren zur Herstellung von Farbstoffmischungen nach den Ansprüchen 1 bis 4, dadurch gekennzeichnet, daß eine Diazokomponente III und/oder IV

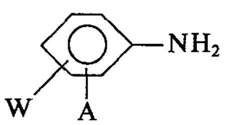
(III)

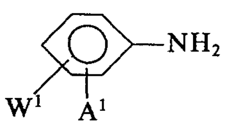
(IV)

diazotiert und auf eine Kupplungskomponente V und/oder VI

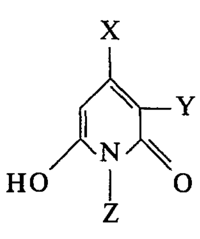
(V)

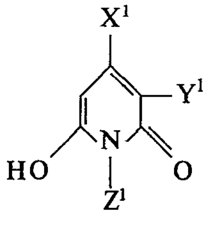
(VI)

gekuppelt wird, wobei die Komponenten so ausgewählt werden, daß erfindungsgemäße Farbstoffmischungen entstehen.

7. Farbstoff der Formel

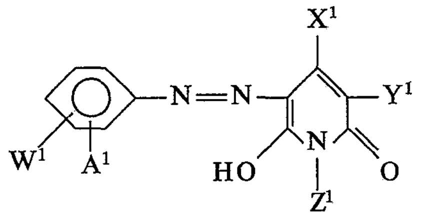

worin

$X^1$ Wasserstoff, Alkyl mit 1 bis 6 C-Atomen, das auch durch Halogen oder Phenyl substituiert sein kann,

$Y^1$ Cyan, Nitro, Alkylcarbonyl mit 1 bis 3 C-Atomen im Alkylrest, Alkoxycarbonyl mit 1 bis 4 C-Atomen im Alkoxyrest, Aminocarbonyl, dessen Aminogruppe auch durch Phenyl monosubstituiert oder durch Alkyl mit 1 bis 4 C-Atomen mono- oder disubstituiert sein kann, Aminosulfonyl, dessen Aminogruppe auch durch Phenyl monosubstituiert oder durch Alkyl mit 1 bis 4 C-Atomen mono- oder disubstituiert sein kann, Phenylsulfonyl, Alkylsulfonyl mit 1 bis 4 C-Atomen, Mono- oder Dialkylphosphonyl mit 1 bis 4 C-Atomen in den Alkylresten,

$Z^1$ Wasserstoff, Alkyl mit 1 bis 4 C-Atomen,

$A^1$ Wasserstoff oder ein Substituent oder mehrere Substituenten aus der Reihe: Halogen, Nitro, Cyan, $CF_3$, Alkyl mit 1 bis 4 C-Atomen, $OR^1$, $COR^2$, $SO_2R^2$, $OSO_2R^2$, $O-CO-R^2$, $COOR^3$, $CON(R^4)R^5$, $SO_2N(R^4)R^5$, $OSO_2N(R^4)R^5$,

$R^1$ Alkyl mit 1 bis 8 C-Atomen, Phenyl, das durch Phenyl, Halogen, Hydroxy substituiert sein kann,

$R^2$ Alkyl mit 1 bis 10 C-Atomen, das durch Phenyl, Phenoxy, Halogen, Hydroxy substituiert sein kann, Phenyl, das durch Alkyl mit 1 bis 12 C-Atomen, Alkoxy mit 1 bis 4 C-Atomen, Halogen substituiert sein kann,

$R^3$ Alkyl mit 1 bis 10 C-Atomen, Cycloalkyl mit 5 bis 7 C-Atomen, Alkenyl mit 2 bis 10 C-Atomen, durch Hydroxy, substituiertes und/oder durch Sauerstoff ein- oder mehrfach unterbrochenes Alkyl mit 1 bis 8 C-Atomen,

$R^4$, $R^5$ Wasserstoff, Alkyl mit 1 bis 6 C-Atomen, das durch Halogen, Phenyl oder Alkoxy mit 1 bis 4 C-Atomen substituiert sein kann, Phenyl, oder $R^4$ und $R^5$ zusammen mit dem N-Atom, an das sie gebunden sind, einen heterocyclischen Ring bilden,

$W^1$ Alkyl oder Alkenyl mit jeweils 8 bis 20 C-Atomen bedeuten.

8. Farbstoff der Formel

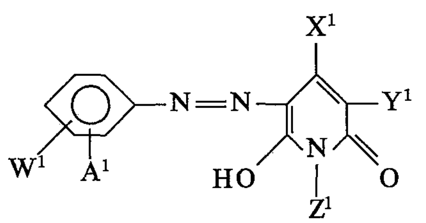

worin

$X^1$ Wasserstoff, Alkyl mit 1 bis 6 C-Atomen, das auch durch Halogen oder Phenyl substituiert sein kann,

$Y^1$ Cyan, Nitro, Alkylcarbonyl mit 1 bis 3 C-Atomen in Alkylrest, Alkoxycarbonyl mit 1 bis 4 C-Atomen im Alkoxyrest, Aminocarbonyl, dessen Aminogruppe auch durch Phenyl monosubstituiert oder durch Alkyl mit 1 bis 4 C-Atomen mono- oder disubstituiert sein kann, Aminosulfonyl, dessen Aminogruppe auch durch Phenyl monosubstituiert oder durch Alkyl mit 1 bis 4 C-Atomen mono- oder disubstituiert sein kann, Phenylsulfonyl, Alkylsulfonyl mit 1 bis 4 C-Atomen, Mono- oder Dialkylphosphonyl mit 1 bis 4 C-Atomen in den Alkylresten,

$A^1$ Wasserstoff oder ein Substituent oder mehrere Substituenten aus der Reihe: Halogen, Nitro, Cyan, $CF_3$, Alkyl mit 1 bis 4 C-Atomen, $OR^1$, $COR^2$, $SO_2R^2$, $OSO_2R^2$, $O-CO-R^2$, $COOR^3$, $CON(R^4)R^5$, $SO_2N(R^4)R^5$, $OSO_2N(R^4)R^5$,

$R^1$ Alkyl mit 1 bis 8 C-Atomen, Phenyl, das durch Phenyl, Halogen, Hydroxy substituiert sein kann,

$R^2$ Alkyl mit 1 bis 10 C-Atomen, das durch Phenyl, Phenoxy, Halogen, Hydroxy substituiert sein kann, Phenyl, das durch Alkyl mit 1 bis 12 C-Atomen, Alkoxy mit 1 bis 4 C-Atomen, Halogen substituiert sein kann,

| | |
|---|---|
| $R^3$ | Alkyl mit 1 bis 10 C-Atomen, Cycloalkyl mit 5 bis 7 C-Atomen, Alkenyl mit 2 bis 10 C-Atomen, durch Hydroxy, substituiertes und/oder durch Sauerstoff ein- oder mehrfach unterbrochenes Alkyl mit 1 bis 8 C-Atomen, |
| $R^4$, $R^5$ | Wasserstoff, Alkyl mit 1 bis 6 C-Atomen, das durch Halogen, Phenyl oder Alkoxy mit 1 bis 4 C-Atomen substituiert sein kann, Phenyl, oder $R^4$ und $R^5$ zusammen mit dem N-Atom, an das sie gebunden sind, einen heterocyclischen Ring bilden, |
| $W^1$ | Wasserstoff, Alkyl mit 1 bis 7 C-Atomen, Alkenyl mit 2 bis 7 C-Atomen, |
| $Z^1$ | Alkyl oder Alkenyl mit jeweils 16 bis 20 C-Atomen |

bedeuten.

9. Verfahren zur Herstelllung von Farbstoffen nach den Ansprüchen 7 oder 8, dadurch gekennzeichnet, daß eine Diazokomponente IV

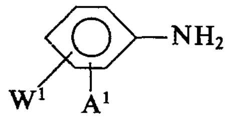

diazotiert und auf eine Kupplungskomponente VI

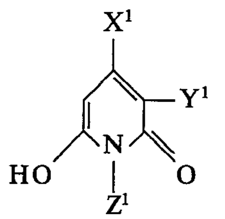

gekuppelt wird, wobei $A^1$, $W^1$, $X^1$, $Y^1$ und $Z^1$ die in den Ansprüchen 7 oder 8 angegebenen Bedeutungen besitzen.

10. Verfahren zum Färben und Bedrucken von synthetischem, hydrophobem Fasermaterial, insbesondere Polyester, und Gemischen solcher Materialien mit Cellulose, dadurch gekennzeichnet, daß man ein Farbstoffgemisch nach den Ansprüchen 1 bis 5 einsetzt.

11. Verwendung von Farbstoffen der Formel II in Anspruch 1 als Fettfarbstoffe zum Colorieren von unpolaren Medien.

**Claims**

1. Mixture of dyestuffs, characterised in that it contains at least one water-insoluble dyestuff of the formula I and at least one water-insoluble dyestuff of the formula II

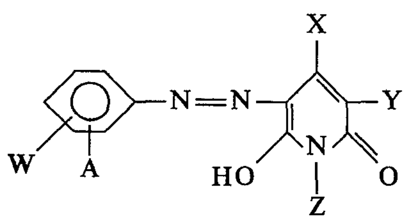

(I)

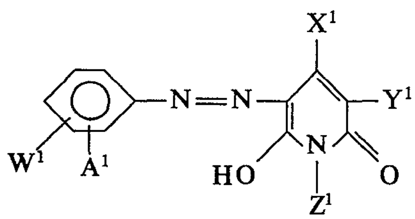

(II)

wherein

| | |
|---|---|
| X and $X^1$ | denote hydrogen or alkyl which has 1 to 6 C atoms and can also be substituted by halogen or phenyl, |
| Y and $Y^1$ | denote cyano, nitro, alkylcarbonyl having 1 to 3 C atoms in the alkyl radical, alkoxycarbonyl having 1 to 4 C atoms in the alkoxy radical, aminocarbonyl in which the amino group can also be monosubstituted by phenyl or monosubstituted or disubstituted by alkyl having 1 to |

4 C atoms, aminosulphonyl in which the amino group can also be monosubstituted by phenyl or monosubstituted or disubstituted by alkyl having 1 to 4 C atoms, phenylsulphonyl, alkylsulphonyl having 1 to 4 C atoms or monoalkylphosphonyl or dialkylphosphonyl having 1 to 4 C atoms in the alkyl radicals,

Z and $Z^1$ denote hydrogen, alkyl which has 1 to 7 C atoms and which can also be interrupted once or several times by oxygen and/or can also be substituted by phenyl, phenoxy, halogen or hydroxyl, alkenyl which has 2 to 7 C atoms and which can also be substituted by phenyl, halogen, hydroxyl or alkoxy having 1 to 4 C atoms, cycloalkyl having 5 to 7 C atoms or phenyl,

A and $A^1$ denote hydrogen or one or more substitutents belonging to the series comprising halogen, nitro, cyano, $CF_3$, alkyl having 1 to 4 C atoms, $OR^1$, $COR^2$, $SO_2R^2$, $OSO_2R^2$, $O-CO-R^2$, $COOR^3$, $CON(R^4)R^5$, $SO_2N(R^4)R^5$ or $OSO_2N(R^4)R^5$,

$R^1$ denotes alkyl having 1 to 8 C atoms or phenyl which can be substituted by phenyl, halogen or hydroxyl,

$R^2$ denotes alkyl which has 1 to 10 C atoms and which can be substituted by phenyl, phenoxy, halogen or hydroxyl, or phenyl which can be substituted by alkyl having 1 to 12 C atoms, alkoxy having 1 to 4 C atoms or halogen,

$R^3$ denotes alkyl having 1 to 10 C atoms, cycloalkyl having 5 to 7 C atoms, alkenyl having 2 to 10 C atoms or alkyl which has 1 to 8 C atoms and is substituted by hydroxyl and/or interrupted once or several times by oxygen,

$R^4$ and $R^5$ denote hydrogen, alkyl which has 1 to 6 C atoms and which can be substituted by halogen, alkyl which has 1 to 6 C atoms and which can be substituted by halogen, phenyl or alkoxy having 1 to 4 C atoms, or phenyl, or $R^4$ and $R^5$, together with the N atom to which they are linked, form a heterocyclic ring,

W denotes hydrogen, alkyl having 1 to 7 atoms or alkenyl having 2 to 7 C atoms, and

$W^1$ and $Z^1$ denote hydrogen, alkyl having 1 to 4 C atoms, or alkyl or alkenyl, each of which has 8 to 20 C atoms, but one of the two substituents must be hydrogen or alkyl having 1 to 4 C atoms and the other substituent must be alkyl or alkenyl, each of which has 8 to 20 atoms.

2. Mixture of dyestuffs according to claim 1, characterised in that Y and $Y^1$ denote cyano.

3. Mixture of dyestuffs according to claim 1 or 2, characterised in that X and $X^1$ denote methyl.

4. Mixture of dyestuffs according to claims 1 to 3, characterised in that it contains 10 to 50 mol%, preferably 10 to 20 mol%, of a dyestuff of the formula II.

5. Mixture of dyestuffs according to claims 1 to 4, characterised in that X and $X^1$ denote $CH_3$, Y and $Y^1$ denote CN, A and $A^1$ denote hydrogen, nitro, cyano, chlorine, bromine, alkyl having 1 to 4 C atoms, alkoxy having 1 to 4 C atoms, or phenylsulphonyloxy, W denotes hydrogen or alkyl having 1 to 4 C atoms, Z denote methyl, but particularly hydrogen, and $W^1$ and $Z^1$ denote hydrogen, methyl or alkenyl or, in particular, alkyl, each of which has 8 to 20 C atoms, and either $W^1$ or $Z^1$ must be hydrogen or methyl.

6. Process for the manufacture of mixtures of dyestuffs according to claims 1 to 4, characterised in that a diazo component III and/or IV

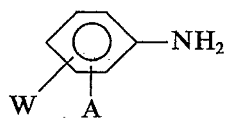

(III)

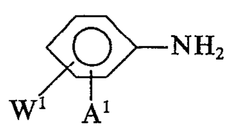

(IV)

is diazotised and the product ist coupled with a coupling component V and/or VI

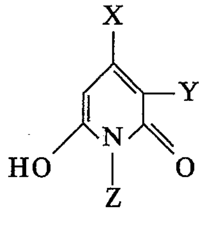

(V)

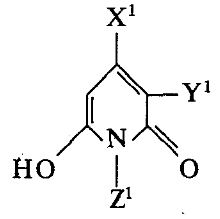

(VI)

the components being selected in such a way that dyestuff mixtures according to the invention are formed.

7. Dyestuff of the formula

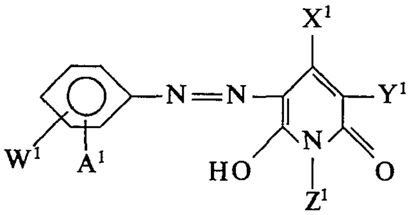

wherein

$X^1$ denotes hydrogen or alkyl which has 1 to 6 C atoms and can also be substituted by halogen or phenyl,

$Y^1$ denotes cyano, nitro, alkylcarbonyl having 1 to 3 C atoms in the alkyl radical, alkoxycarbonyl having 1 to 4 C atoms in the alkoxy radical, aminocarbonyl in which the amino group can also be monosubstituted by phenyl or mono substituted or disubstituted by alkyl having 1 to 4 C atoms, aminosulphonyl in which the amino group can also be monosubstituted by phenyl or monosubstituted or disubstituted by alkyl having 1 to 4 C atoms, phenylsulphonyl, alkylsulphonyl having 1 to 4 C atoms, or monoalkylphosphonyl or dialkylphosphonyl having 1 to 4 C atoms in the alkyl radical,

$Z^1$ denotes hydrogen or alkyl having 1 to 4 C atoms,

$A^1$ denotes hydrogen or one or more substituents belonging to the series comprising: halogen, nitro, cyano, $CF_3$, alkyl having 1 to 4 C atoms, $OR^1$, $COR^2$, $SO_2R^2$, $OSO_2R^2$, $O-CO-R^2$, $COOR^3$, $CON(R^4)R^5$, $SO_2N(R^4)R^5$ or $OSO_2N(R^4)R^5$,

$R^1$ denotes alkyl having 1 to 8 C atoms or phenyl which can be substituted by phenyl, halogen or hydroxyl,

$R^2$ denotes alkyl which has 1 to 10 C atoms and can be substituted by phenyl, phenoxy, halogen or hydroxyl, or denotes phenyl which can be substituted by alkyl having 1 to 12 C atoms, alkoxy having 1 to 4 C atoms or halogen,

$R^3$ denotes alkyl having 1 to 10 C atoms, cycloalkyl having 5 to 7 C atoms, alkenyl having 2 to 10 C atoms or alkyl which has 1 to 8 C atoms and is substituted by hydroxyl and/or interrupted once or several times by oxygen,

$R^4$ and $R^5$ denote hydrogen, alkyl which has 1 to 6 C atoms and can be substituted by halogen phenyl or alkoxy having 1 to 4 C atom, or phenyl, or $R^4$ and $R^5$, together with the N atom to which they are linked, from a heterocyclic ring, and

$W^1$ denotes alkyl or alkenyl, each of which has 8 to 20 C atoms.

8. Dyestuff of the formula

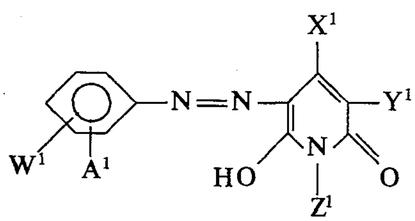

wherein

$X^1$ denotes hydrogen or alkyl which has 1 to 6 C atoms and can also be substituted by halogen or phenyl,

$Y^1$ denotes cyano, nitro, alkylcarbonyl having 1 to 3 C atoms in the alkyl radical, alkoxycarbonyl having 1 to 4 C atoms in the alkoxy radical, aminocarbonyl in which the amino group can also be monosubstituted by phenyl or monosubstituted or disubstituted by alkyl having 1 to

4 C atoms, aminosulphonyl in which the amino group can also be monosubstituted by phenyl or monosubstituted or disubstituted by alkyl having 1 to 4 C atoms, phenylsulphonyl, alkylsulphonyl having 1 to 4 C atoms, or monoalkylphosphonyl or dialkylphosphonyl having 1 to 4 C atoms in the alkyl radical,

$A^1$ denotes hydrogen or one or more substituents belonging to the series comprising: halogen, nitro, cyano, $CF_3$, alkyl having 1 to 4 C atoms, $OR^1$, $COR^2$, $SO_2R^2$ $OSO_2R^2$, $O-CO-R^2$, $COOR^3$, $CON(R^4)R^5$, $SO_2N(R^4)R^5$ or $OSO_2N(R^4)R^5$,

$R^1$ denotes alkyl having 1 to 8 C atoms or phenyl which can be substituted by phenyl, halogen or hydroxyl,

$R^2$ denotes alkyl which has 1 to 10 C atoms and can be substituted by phenyl, phenoxy, halogen or hydroxyl, or denotes phenyl which can be substituted by alkyl having 1 to 12 C atoms, alkoxy having 1 to 4 C atoms or halogen,

$R^3$ denotes alkyl having 1 to 10 C atoms, cycloalkyl having 5 to 7 C atoms, alkenyl having 2 to 10 C atoms or alkyl which has 1 to 8 C atoms and is substituted by hydroxyl and/or interrupted once or several times by oxygen,

$R^4$ and $R^5$ denote hydrogen, alkyl which has 1 to 6 C atoms and can be substituted by halogen, phenyl or alkoxy having 1 to 4 C atoms, or phenyl, or $R^4$ and $R^5$, together with the N atom to which they are linked, from a heterocyclic ring,

$W^1$ denotes hydrogen, alkyl having 1 to 7 C atoms or alkenyl having 2 to 7 C atoms and

$Z^1$ denotes alkyl or alkenyl, each of which has 16 to 20 C atoms.

9. Process for the manufacture of dyestuffs according to claim 7 or 8, characterised in that a diazo component IV

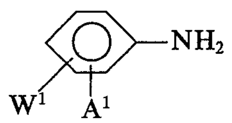

is diazotised and the product is coupled with a coupling component VI

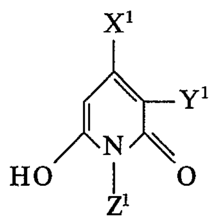

in which formulae $A^1$, $W^1$, $X^1$, $Y^1$ and $Z^1$ have the meanings indicated in claim 7 or 8.

10. Process for dyeing and printing synthetic, hydrophobic fibre materials, particularly polyester and mixtures of such materials with cellulose, characterised in that a mixture of dyestuffs according to claims 1 to 5 is employed.

11. Use of dyestuffs of the formula II in claim 1 as dyestuffs for fats for colouring non-polar media.

## Revendications

1. Mélange de colorants, caractérisé en ce qu'il contient au moins un colorant de formule (I) insoluble dans l'eau et au moins un colorant de formule (II) insoluble dans l'eau:

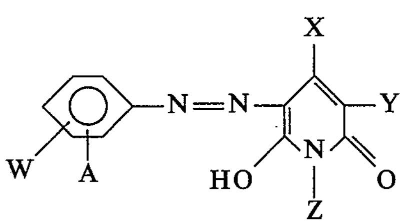

(I)

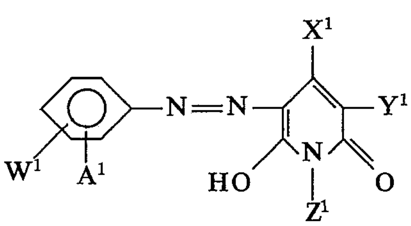

(II)

formules dans lesquelles:

X et $X^1$ sont chacun un atome d'hydrogène, un groupe alkyle ayant 1 à 6 atomes de carbone (pouvant également être substitué par de l'halogène ou par un groupe phényle),

Y et $Y^1$ sont chacun un groupe cyano, nitro, alkylcarbonyle comportant 1 à 3 atomes de carbone dans le radical alkyle, alcoxycarbonyle comportant 1 à 4 atomes de carbone dans le radical alcoxy, aminocarbonyle (dont le groupe amino peut être aussi mono-substitué par un groupe phényle ou mono- ou disubstitué par un groupe alkyle ayant 1 à 4 atomes de carbone), aminosulfonyle (dont le groupe amino peut aussi être monosubstitué par un groupe phényle ou mono- ou disubstitué par un groupe alkyle ayant 1 à 4 atomes de carbone), phénylsulfonyle, alkylsulfonyle axant 1 à 4 atomes de carbone, mono- ou dialkylphosphonyle ayant 1 à 4 atomes de carbone, mono- ou dialkylphosphonyle ayant 1 à 4 atomes de carbone dans les redicaux alkyles,

Z est un atome d'hydrogène, un groupe alkyle ayant 1 à 7 atomes de carbone (pouvant également être interrompu une ou plusieurs fois par de l'oxygène et, éventuellement ou en variante, également substitué par un groupe phényle, phénoxy, halogéno ou hydroxy), alcényle ayant 2 à 7 atomes de carbone (pouvant également être substitué par un groupe phényle, halogéno, hydroxyle, alcoxy ayant 1 à 4 atomes de carbone), cycloalkyle ayant 5 à 7 atomes de carbone, ou phényle;

A et $A^1$ représentent chacun un atome d'hydrogène ou un ou plusieurs substituants choisis parmi un groupe halogéno, nitro, cyano, $CF_3$, alkyle ayant 1 à 4 atomes de carbone, $OR^1$, $COR^2$, $SO^2R^2$, $OSO_2R^2$, $O-CO-R^2$, $COOR^3$, $CON(R^4)R^5$, $SO_2N(R^4)R^5$, $OSO_2N(R^4)R^5$,

$R^1$ est un groupe alkyle ayant 1 à 8 atomes de carbone ou phényle (pouvant être substitué par un groupe phényle, halogéno, ou hydroxyle),

$R^2$ est un groupe alkyle ayant 1 à 10 atomes de carbone (pouvant être substitué par un groupe phényle, phénoxy, halogéno ou hydroxyle), phényle (pouvant être substitué par un groupe alkyle ayant 1 à 12 atomes de carbone, alcoxy ayant 1 à 4 atomes de carbone ou halogéno),

$R^3$ est un groupe alkyle ayant 1 à 10 atomes de carbone, cycloalkyle ayant 5 à 7 atomes de carbone, alcényle ayant 2 à 10 atomes de carbone, alkyle ayant 1 à 8 atomes de carbone (pouvant être substitué par un groupe hydroxyle et, éventuellement ou en variante, interrompu une ou plusieurs fois par de l'oxygène),

$R^4$ et $R^5$ représentent chacun un atome d'hydrogène, un groupe alkyle ayant 1 à 6 atomes de carbone (pouvant être substitué par un atome d'halogène ou un groupe phényle ou alcoxy ayant 1 à 4 atomes de carbone) phényle, ou bien $R^4$ et $R^5$, pris avec l'atome d'azote auquel ils sont fixés, forment un noyau hétérocyclique,

W est un atome d'hydrogène ou un groupe alkyle ayant 1 à 7 atomes de carbone ou alcényle ayant 2 à 7 atomes de carbone,

$W^1$ et $Z^1$ représentant chacun un atome d'hydrogène ou un groupe alkyle ayant 1 à 4 atomes de carbone, alkyle ou alcényle ayant chacun 8 à 20 atomes de carbone, l'un des deux symboles devant être un atome d'hydrogène ou un groupe alkyle ayant 1 à 4 atomes de carbone et l'autre symbole devant représenter un groupe alkyle ou alcényle ayant chacun 8 à 20 atomes de carbone.

2. Mélange de colorants selon la revendication 1, caractérisé en ce que Y et $Y^1$ représentent chacun un groupe cyano.

3. Mélange de colorants selon l'une des revendications 1 et 2, caractérisé en ce que X et $X^1$ représentent chacun un groupe méthyle.

4. Mélange de colorants selon l'une quelconque des revendications 1 à 3, caractérisé en ce qu'il contient 10 à 50 moles %, de préférence 10 à 20 moles %, d'un colorant de formule (II).

5. Mélange de colorants selon l'une quelconque des revendications 1 à 4, caractérisé en ce que X et $X^1$ représentent chacun $CH_3$; Y et $Y^1$ représentent chacun CN; A et $A^1$ représentent chacun un atome d'hydrogène ou un groupe nitro, cyano, chloro, bromo, alkyle ayant 1 à 4 atomes de carbone, alcoxy ayant 1 à 4 atomes de carbone, phénylsulfonyloxy; W représente un atome d'hydrogène ou un groupe alkyle ayant 1 à 4 atomes de carbone; Z représente un groupe méthyle mais en particulier un atome d'hydrogène, $W^1$ et $Z^1$ représentent chacun un atome d'hydrogène, un groupe méthyle, alcényle ou en particulier alkyle ayant chacun 8 à 20 atomes de carbone, l'un des symboles $W^1$ et $Z^1$ devant représenter un atome d'hydrogène ou un groupe méthyle.

6. Procédé pour produire des mélanges de colorants selon l'une quelconque des revendications 1 à 4, caractérisé en ce qu'on diazote un composant diazotable de formule (III) et, éventuellement ou en variante, un composant diazotable de formule (IV):

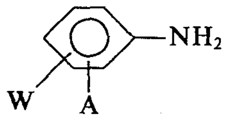

(III)

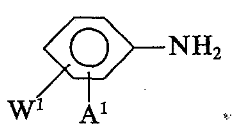

(IV)

et l'on copule sur un copulant de formule (V) et, éventuellement ou en variante, de formule (VI):

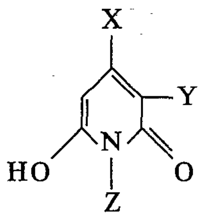

(V)

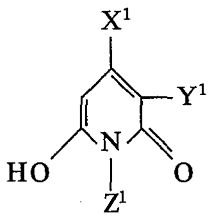

(VI)

en choisissant les composants de manière à obtenir des mélanges de colorants selon l'invention.

7. Colorant, répondant à la formule:

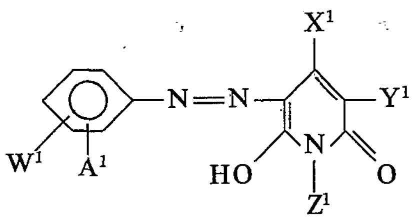

dans laquelle:

$X^1$ est un atome d'hydrogène, un groupe alkyle ayant 1 à 6 atomes de carbone (pouvant également être substitué par un atome d'halogène ou un groupe phényle),

$Y^1$ est un groupe cyano, nitro, alkylcarbonyle comportant 1 à 3 atomes de carbone dans le radical alkyle, alcoxycarbonyle ayant 1 à 4 atomes de carbone dans le radical alcoxy, aminocarbonyle (dont le groupe amino peut aussi être monosubstitué par un groupe phényle ou mono- ou disubstitué par un groupe alkyle ayant 1 à 4 atomes de carbone), aminosulfonyle (dont le groupe amino peut aussi être monosubstitué par un groupe phényle ou mono- ou disubstitué par un groupe alkyle ayant 1 à 4 atomes de carbone), phénylsulfonyle, alkylsulfonyle ayant 1 à 4 atomes de carbone dans les radicaux alkyle;

$Z^1$ représente un atome d'hydrogène ou un groupe alkyle ayant 1 à 4 atomes de carbone,

$A^1$ représente un atome d'hydrogène ou un ou plusieurs substituants choisis parmi un atome d'halogène, un groupe nitro, cyano, $CF_3$, alkyle ayant 1 à 4 atomes de carbone, $OR^1$, $COR^2$, $SO_2R^2$, $OSO_2R^2$, $O-CO-R^2$, $COOR^3$, $CON(R^4)R^5$, $SO_2N(R^4)R^5$, $OSO_2N(R^4)R^5$,

$R^1$ est un gropue alkyle ayant 1 à 8 atomes de carbone ou phényle (pouvant être substitué par un groupe phényle, halogéno ou hydroxyle),

$R^2$ est un groupe alkyle comportant 1 à 10 atomes de carbone (qui peut être substitué par un groupe phényle, phénoxy, halogéno ou hydroxyle), phényle (qui peut être substitué par un groupe alkyle ayant 1 à 12 atomes de carbone, alcoxy ayant 1 à 4 atomes de carbone ou halogéno),

$R^3$ est un groupe alkyle ayant 1 à 10 atomes de carbone, cycloalkyle ayant 5 à 7 atomes de carbone, alcényle ayant 2 à 10 atomes de carbone ou alkyle ayant 1 à 8 atomes de carbone (pouvant être substitué par un groupe hydroxyle et, éventuellement ou en variante, interrompu une ou plusieurs fois par de l'oxygène),

$R^4$ et $R^5$ représentent chacun un atome d'hydrogène, un groupe alkyle ayant 1 à 6 atomes de carbone (pouvant être substitué par un atome d'halogène ou un groupe phényle ou alcoxy ayant 1 à 4 atomes de carbone), phényle ou $R^4$ et $R^5$, pris avec l'atome d'azote auquel ils sont fixés, peuvent former un noyau hétérocyclique, et

$W^1$ représente un groupe alkyle ou alcényle ayant chacun 8 à 20 atomes de carbone.

8. Colorant répondant à la formule:

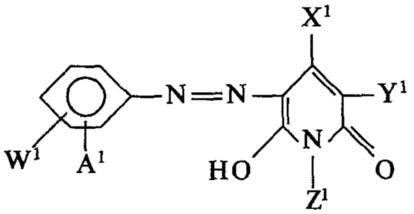

dans laquelle:

- $X^1$ représente un atome d'hydrogène ou un groupe alkyle ayant 1 à 6 atomes de carbone (pouvant également être substitué par de l'halogène ou par un groupe phényle),
- $Y^1$ représente un groupe cyano, nitro, alkylcarbonyle ayant 1 à 3 atomes de carbone dans le radical alkyle, alcoxycarbonyle ayant 1 à 4 atomes de carbone dans le radical alcoxy, aminocarbonyle (dont le groupe amino peut aussi être monosubstitué par un groupe phényle ou mono- ou disubstitué par un groupe alkyle ayant 1 à 4 atomes de carbone), aminosulfonyle (dont le groupe amino peut aussi être monosubstitué par un groupe phényle ou être mono- ou disubstitué par un groupe alkyle ayant 1 à 4 atomes de carbone), phénylsulfonyle, alkylsulfonyle ayant 1 à 4 atomes de carbone, ou mono- ou dialkylphosphonyle ayant 1 à 4 atomes de carbone dans les radicaux alkyles,
- $A^1$ représente un atome d'hydrogène ou un ou plusieurs substituants choisis parmi un atome d'halogène, un groupe nitro, cyano, $CF_3$, alkyle ayant 1 à 4 atomes de carbone, $OR^1$, $COR^2$, $SO_2R$, $OSO_2R^2$, $O-CO-R^2$, $COOR^3$, $CON(R^4)R^5$, $SO_2N(R^4)R^5$, $OSO_2(R^4)R^5$,
- $R^1$ est un groupe alkyle ayant 1 à 8 atomes de carbone ou phényle (pouvant être substitué par un groupe phényle, halogéno ou hydroxyle),
- $R^2$ est un groupe alkyle ayant 1 à 10 atomes de carbone (pouvant être substitué par un groupe phényle, Phénoxy, halogéno ou hydroxyle), phényle (pouvant être substitué par un groupe alkyle ayant 1 à 12 atomes de carbone, alcoxy ayant 1 à 4 atomes de carbone ou halogéno),
- $R^3$ est un groupe alkyle ayant 1 à 10 atomes de carbone, cycloalkyle ayant 5 à 7 atomes de carbone, alcényle ayant 2 à 10 atomes de carbone ou un groupe alkyle ayant 1 à 8 atomes de carbone (pouvant être substitué par un groupe hydroxyle et, éventuellement ou en variante, interrompu une ou plusieurs fois par de l'oxygène),
- $R^4$ et $R^5$ représentent chacun un atome d'hydrogène ou un groupe alkyle ayant 1 à 6 atomes de carbone (pouvant être substitué par de l'halogène ou par un groupe phényle ou alcoxy ayant 1 à 4 atomes de carbone), ou phényle, ou bien $R^4$ et $R^5$, pris avec l'atome d'azote auquel ils sont fixés, peuvent former un noyau hétérocyclique,
- $W^1$ représente un atome d'hydrogène ou un groupe alkyle ayant 1 à 7 atomes de carbone ou alcényle ayant 2 à 7 atomes de carbone, et
- $Z^1$ représente un groupe alkyle ou alcényle ayant chacun 16 à 20 atomes de carbone.

9. Procédé pour produire des colrants selon l'une des revendications 7 et 8, caractérisé en ce qu'on diazote un composant diazotable de formule (IV):

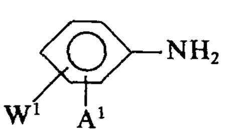

(IV)

et l'on copule sur un copulant de formule (VI)

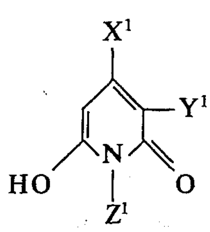

(VI)

(formules dans lesquelles $A^1$, $W^1$, $X^1$, $Y^1$ et $Z^1$ ont les sens indiqués dans une des revendications 7 et 8).

10. Procédé pour teindre et imprimer une matière en fibres hydrophobes synthétiques, notamment du polyester, et des mélanges de telles matières avec de la cellulose, procédé caractérisé en ce qu'on utilise un mélange de colorants selon l'une quelconque des revendications 1 à 5.

11. Application des colorants de formule (II) selon la revendication 1 comme colorants pour la coloration de milieux non polaires.